# EUROPEAN PATENT SPECIFICATION

(11) **EP 3 360 220 B1**
(45) Date of publication and mention of the grant of the patent: **15.04.2026**
(21) Application number: 16854542.4
(22) Date of filing: 10.10.2016
(51) Int. Cl.: G05F 1/67, H02J 1/10, H02J 7/34

(54) **MAXIMUM ENERGY UTILIZATION POINT TRACKING TECHNOLOGIES**
TECHNOLOGIEN ZUR VERFOLGUNG VON MAXIMALENERGIENUTZUNGSPUNKTEN
TECHNOLOGIES DE SUIVI DE POINT D'UTILISATION D'ÉNERGIE MAXIMALE

(30) Priority: 09.10.2015 US 201514880101
(43) Date of publication of application: 15.08.2018
(73) Proprietor: LT (USA), CORPORATION, Edinburg, TX 78539 (US)
(72) Inventor: SHUY, Geoffrey Wen-Tai, Hsinchu 300 (TW); LAI, Hsin-Chen, Hsinchu 300 (TW); LI, Chang-Horang, Hsinchu 300 (TW)
(74) Representative: Kraus & Lederer PartGmbB
(86) International application number: PCT/US2016/056299
(87) International publication number: WO 2017/062962

(56) References cited:
- US-A1- 2010 219 690
- US-A1- 2011 140 649
- US-A1- 2011 140 649
- US-A1- 2011 210 613
- US-A1- 2014 268 957

## Description

### BACKGROUND

Many "green energy" electric generators utilize nature renewable energy sources that are characterized as having time varying intensity; such as solar power, wind, tide, and tidal wave motion. Most of such power generators each incorporate a device named the "maximum power point tracker (MPPT)" to track the instantaneous maximum power production point (MPPP) voltage. The MPPT device typically is a firmware; and keeps track of the time varying voltage resulting in the maximum power production (MPPP) from a primary energy source having time varying intensity.

Typically, the commercial green energy system integrator applies the MPPP voltage to regulate the entire system operation including the energy generation, the energy extraction, and the energy preparation and delivery to the load. In other words, the commercial green energy system forces the entire system to always operate at generator's MPPP voltage derived from the MPPT firmware. This practice is hereinafter referred to as the "blind MPPT conformation". US 2011/0140649 A1 discloses an energy storage system for charging and discharging power of battery packs connected between a grid and a variable power source.

### BRIEF SUMMARY

The inventors have discovered that the blind MPPT practice is suboptimal for a number of reasons. First, the blind MPPT practice does not match the characteristics of the energy extraction device to effectively and efficiently extract the produced energy. Second, the blind MPPT practice does not match the device to prepare and/or deliver the extracted energy for efficient energy utilization. Third, the energy utilization efficiency is not only inextricably dependent on the power production but also on power demand. Fourth, the typical instantaneous power consumption of the load is not equal to the instantaneous power produced by the generator in any energy system, even when complying with the energy and change conservation laws.

The practice of blind MPPT conformation can lead the commercial "green energy system" designers to ignore the need to experimentally determine the devices' effectiveness and efficiencies such as the effectiveness and efficiency of energy extraction from the generator, and such as the effectiveness and efficiency of energy that is prepared and then delivered to the load. In accordance with the principle described herein the controller efficiency of a system is the same as its "energy utilization efficiency". In this description and in the claims, the instantaneous "energy utilization efficiency" is defined as the instantaneous energy consumed by the load plus that stored into the reservoir divided by the instantaneous energy generated by the generator. In a preferred embodiment, this instantaneous value is measured in a condition that holds the primary power input and the load steady for a long enough period of time such that the values of the power generated, the power consumption, the power storage, and the ratio are all reached steady state.

Without indicating how the relevant efficiency measured experimentally, commercial "green energy systems" typically proclaim greater than 90% efficiency for their system's "controller". However, the inventors' experimental measurements of many commercial systems reveal that the efficiency of energy extraction from the generator, and that of preparing then delivery of the energy to the load can be very poor when regulating the system operation to blindly conform to the MPPP voltage. A typical controller that practices blind MPPT conformance practice can have efficiencies typically be below 30% even when advertised to be high.

In lieu of tracking maximum power production point (MPPP), the principles described herein proposes to track the maximum energy utilization point (MEUP). When one consistently operates an energy system at its MEUP, one can receive the most amount of energy benefit from the energy system. This is the only way to maximize the energy that can be exploited from any power generation system. Accordingly a need exists to overcome the problems mentioned above and to especially increase a power extraction from an energy system and to make it less dependent from frequency. This need is met by the features of the independent claim. Further aspects are described in the dependent claims.

The inventors performed thorough investigations on energy systems; by measuring the efficiencies of every stage, from energy generation, to energy extraction, to energy preparation, to energy delivery, and to energy consumption; and thereby revealed problems to be addressed. The inventors developed ways of improving the efficiency at each stage; decoupled the energy production/extraction and energy supply; and optimized these processes separately. This resulted in a practical way of finding and tracking the maximum energy utilization point.

The MEUP tracking technologies operate the generator at near-maximum power production; incorporate the invented surplus energy extraction devices to effectively extract all the maximum power generated; temporarily store the surplus energy into designed energy reservoirs; add the invented devices to combine the energy from the extractor and from the reservoir; and deliver right amount of power to exactly satisfy the load demand.

In doing so, the principles described herein results in a practical optimization of maximum energy utilization solution for energy systems, especially for green energy system, which converts electricity from renewable energy sources that having the characteristics of time varying intensity such as the solar power, wind, tide, or wave motion; thereby effectuating the maximum energy utilization point tracking (MEUPT).

### BRIEF DESCRIPTION OF THE DRAWINGS

In order to describe the manner in which the above-recited and other advantages and features can be obtained, a more particular description of various embodiments will be rendered by reference to the appended drawings. Understanding that these drawings depict only sample embodiments and are not therefore to be considered to be limiting of the scope of the invention, the embodiments will be described and explained with additional specificity and detail through the use of the accompanying drawings in which:
Figure 1A symbolically illustrates a block diagram of a conventional energy system;
Figure 1B symbolically illustrates a block diagram of an energy system in accordance with the principles described herein;
Figure 1C symbolically illustrates block diagram of general components of an energy system;
Figures 2A through 2C symbolically illustrates the current, voltage, and power, respectively, of a DC generator extracted by a DC/AC inverter under different load demands, as function of time;
Figure 3A through 3C symbolically illustrates the current, voltage, and power, respectively, of a DC generator extracted by a Pulse Width Modulator (PWM) energy extractor under different load demands, as function of time;
Figure 4 symbolically illustrates a mechanism to extract the surplus power left-over from the DC/AC inverter's energy extraction in accordance with the principles described herein; and
Figure 5 symbolically illustrates the proposed mechanism to extract the surplus power left-over from the PWM energy extractor's extraction in accordance with the principles described herein.

### DETAILED DESCRIPTION

### Section One: Review on Energy System

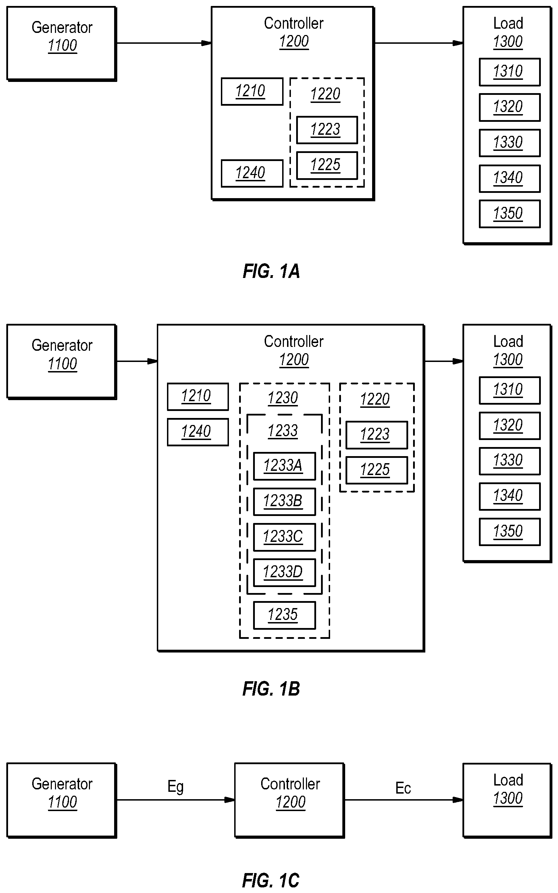

An energy system 1000 consists of generator(s) 1100, regulator(s) 1200, load(s) 1300; and all their module(s) thereof, described hereinafter as depicted in Figure 1. The Figure 1A depicts a conventional energy system block diagram; while the Figure 1B depicts the block diagram structure of an energy system in accordance with the principles described herein. The efficiency of any subsystem is defined herein as the output of this subsystem divided by the output of the previous subsystem. As a typical example, the regulator efficiency is defined as the energy delivered to the load, E_{c} divided by the energy produced by the generator, E_{g}; as depicted in Figure 1C. The names of the modules depicted in Figure 1 are listed as follows: 1000: Energy system, 1100: Generator, 1200: Controller or regulator, 1210: Conventional energy extraction device, 1223: Power preparation regulator, 1225: Power delivery regulator, 1230: Surplus regulator, 1233: Surplus extract/utilize device, 1233A: Active surplus extractor, 1233B: Passive surplus extractor, 1233C: Supply regulator, 1233D: Energy adjustment regulator, 1235: Energy reservoir, 1240: MPPT, 1300: Load, 1310: Lamps, 1320: Pumps, 1330: Office equipment, 1340: Appliance, and 1350: Air-conditioner.

As depicted in Figure 1A and 1B, an energy system 1000 comprises (1) at least one electric generator 1100 to convert primary energy into electric power; (2) a controller subsystem 1200 (also named as "energy management subsystem" or "regulator") to regulate all required management functions of the whole energy system through modules (from 1210 to 1240) of 1200. These management functions include the regulation of power generation 1100, the conventional energy extraction device 1210, the module 1220 to prepare (module 1223) and deliver (module1225) the energy to the load, and other critical functions described later. The controller subsystem 1200 may also include other functional module such as the MPPT 1240. The load 1300 consist of one or combination of various (resistive and/or inductive) equipment to utilize the produced electricity; such as (a) lamp(s), 1310; (b) water-pump(s), 1320; (c) office equipment 1330, such as cash-register(s), type-writer(s), and computer(s); (d) appliance(s)1340, such as refrigerator(s), fan(s), toaster(s), and (e) air-conditioner(s) 1350. To reiterate, an energy system 1000 consists of generator(s) 1100, regulator(s) 1200, load(s) 1300; and all their module(s) thereof.

An electric generator is a device that converts the energy from a primary energy source (such as coal, oil, nature gas, nuclear, and so forth) into electricity. The green power generator utilizes renewable nature energy as the primary sources including solar-rays, wind, tide, or wave motion to produce electricity. These primary sources typically associate with huge time varying energy intensity; and result in a time varying maximum power production point (MPPP) voltage. The commercial green energy systems typically incorporate a MPPT 1240 (as a module in the subsystem 1200) to track the MPPP voltage.

The standard efficiency of the energy generator is defined as the value of its maximum electric power production (under a standard primary power input) divided by the primary power input. However using primary sources of time varying power, the efficiency of the generator is also varying in time; and defined as an instantaneous efficiency value that is equal to the instantaneous maximum power production (under the instantaneous primary power input) divided by corresponding instantaneous primary power input.

As depicted in the Figure 1A, the controller (or named as; the subsystem of energy management, or the regulator) 1200 comprises device 1210 to extract energy produced in the generator 1100. The controller1200 also comprises device 1220 to prepare the electricity (module1223) and to deliver (module1225) the power to the loads 1300. The module 1223 is thus named as the "power preparation regulator"; and the module 1225 is named as the "power delivery regulator" herein. As depicted in Figure 1C; the controller efficiency is defined as the energy consumed by the load plus the stored energy divided by the energy generated by the generator. It is also equals to ((the power extraction efficiency of the device 1210) x (the power delivery efficiency of the device 1220)) when the system is designed without an energy reservoir to hold the surplus energy for later usage. The "energy utilization efficiency" is also defined the same way, and equals to the controller efficiency.

The device 1210's power (energy) extraction efficiency is defined as the instantaneous value of power output from device 1210 divided by the maximum power generated at the generator(s), when conforming to the MPPT practice. Any generated power not being picked-up (extracted) by the device 1210 contributes ineffectiveness of device 1210. The device 1220's power (energy) deliver efficiency is defined as the instantaneous value of 1220's power output deliver to and consumed by the loads divided by the power output of the device 1210.

Notice that the energy delivery efficiency is zero when there is no load demand; and the energy extraction efficiency is also zero when there is no load demand for designs without energy reservoir. Thus, the load demand and the energy reservoir capacity can affect the energy delivery efficiency; and affect the energy extraction efficiency. This fact shows that the power extraction, preparation, and delivery are intimately related to the power demand. Accordingly, MPPT practice alone does not lead to derive maximum energy benefit from an energy system.

To elaborate further, some types of loads (such as water-pump(s)) have very narrow operation power range; and can cause power system disruption when gross mismatching in power production and consumption occurs. When the delivering power is below the lower limit of power demand, the load can stop functioning, and suddenly disengage from the power demand. For instance, when the supplying power is lower than the lower limit of a water-pump operation; the pump just stops pumping and disengages from the load demand, and the generated energy is thereby wasted. On the other hand, when power delivered is higher than the maximum power demand range, either some of the power will not be picked-up by the energy extraction device 1210 and part of energy get wasted; or the load disengagement occur. The above situations can occur regardless of whether the generator is operated at its MPPP voltage or not. The above power mismatching situations are real; commonly and frequently occur in green energy systems including solar powered water pump systems.

The above analyses on energy system depicted in Figure 1A can be summarized as: (1) the power demand of the load can greatly affect the energy deliver efficiency and also the energy extract efficiency; (2) thus, the power demand of the load can also affect the controller efficiency, the multiplication of these two efficiencies; (3) the operation point of maximum controller efficiency may not coincide with the MPPT operation; (4) the blind MPPT conformation does not guarantee the maximum amount of energy benefit is derived from the energy system; and most importantly, (5) in order to optimize the energy benefit (utilization) from an energy system, it is necessary to decouple the energy extraction from the energy delivery; and optimize the energy production/extraction and energy preparation/consumption separately; but complying with energy and charge conservation laws.

### Section Two: The Invention and the Impacts

As depicted in Figure 1B, the energy system embodiment in accordance with the principles described herein, adds a device 1230 comprising of a device 1233 working in conjunction with an energy reservoir 1235. The device 1230 is named as the "surplus regulator"; and the device 1233 is named as the "surplus extract/utilize device" herein. The device 1233 comprises four modules; 1233A, 1233B, 1233C, and 1233D; their functions and effects will be described. When properly designed, the device 1230 can selectively store the surplus energy during energy extraction, and enhance or reduce the supply-power to the load during the energy delivery; it can also handle the power mismatching smoothly and effectively.

To elaborate, the device 1233 can selectively store the maximum amount of the available surplus energy into the energy reservoir 1235 during energy extraction process over the long term of a period of time. The surplus energy is defined as the energy produced by the generator(s) but that is not picked-up by the conventional energy extraction device 1210. Thus, the device 1233 helps the energy management subsystem 1200 to extract the maximum amount of energy from the generator; even when load disengagement occurs. This embodiment of Figure 1B makes the surplus energy useful and greatly improves the energy extraction efficiency.

Using the energy stored in the reservoir 1235, the device 1233 can also selectively provide the needed insufficient energy into the preparation module 1223; such that the delivery module 1225 of the 1220 can deliver power to satisfy a load demand larger than the extracted power or even the generated power. This results in energy-supply enhancement to smoothly and effectively bridge through periods of high load demand. Thus, the principles described herein can reduce the frequency of load disengagement and greatly improve the energy delivery efficiency. The principles described herein can also prolong the power supply time via the stored surplus energy when there is no production; and increase the amount of energy utilization; especially for the solar energy system that is to endure hours of cloudy or night-time conditions in each 24 hours period.

To summarize, the conventional design does not consist of the device 1230 and its modules to selectively pick-up the surplus energy, to adjust the right amount of delivery energy, and/or to provide insufficient energy such that the right amount of energy is delivered to exactly satisfy the instantaneous load demand. Accordingly, the conventional design lacks the benefit of maximum energy utilization described herein. The apparent differences between the conventional system and the system in accordance with the principles described herein can be seen by comparing the block diagrams in Figure 1A and 1B.

With the principles described herein, the power extracted from the power generator is the combination of the power extracted by the conventional device 1210 and the surplus power extracted by the added device 1230. As will be described further below, the principles described herein also proposes mechanisms that can make the sum of the two extracted power to be very close to the generated power. Therefore, neglecting the energy consumed by the devices 1210 and 1230, the energy extraction efficiency of the embodiments can be approximately 100%.

Also with the principles described herein, the device 1230 can regulate the power extracted; through the management functions provided by the modules of the device 1233 (devices 1233A, 1233B, 1233C, and 1233D) to combine the available energy from the generator and the reservoir; and to assist the devices 1223 and 1225 (modules of the device 1220) in providing the right amount of power to near-exactly satisfy the instantaneous load demand. Thus, the device 1230 can also provide the ability that decouples energy production from energy consumption (utilization).

As will be described further below, the principles described herein offer mechanisms that can arrange the power to be very close to the right amount of input power for the device 1220; such that the output power of the device 1220 can near-exactly satisfy the momentary power demand. Therefore, neglecting the energy consumed by the devices 1220 and 1230, the embodiment's energy deliver efficiency can also approach 100%. Thus, the principles described herein decouples the power generation and consumption through management functional modules 1233A, 1233C and 1233D working in conjunction with the energy reservoir 1235 and device 1233B; resulting in the capability of independently optimizing energy production extraction; and energy delivery.

To summarize, accordance with the principles described herein, a device 1230 is added to selectively store the surplus power into the proper temporary reservoirs; which device 1230 can improve the energy extraction to 100% theoretically. The added device 1230; specifically, its modules 1233C and 1233D can also selectively combine the energy extracted from generator 1100 and the energy in the reservoirs (1235 and device 1233B) into the right amount of energy; and then deliver this right amount of power as input to the device 1223, such that the output power of the device 1225 can near-exactly satisfy the load demand. This can improve the energy supply efficiency to 100% theoretically. Thus, the principles described herein can decouple and independently optimize the efficiencies of the power production, extraction, and delivery.

To summarize; assuming compliance with the law of energy conservation, the instantaneous power consumption by the load typically does not equal to the power production in any energy system. Without device 1230; when the power demand is larger than the capacity (defined as the capacity of power produced, extracted, prepared, and delivered), it can cause load disengagement and greatly reduce the energy utilization efficiency. On the other hand, when the capacity is greater than the power demand, left-over power could result, which is not being extracted or delivered; thereby reducing the energy deliver (utilization) efficiency.

By adding the device 1230 comprising of the device 1233, this invention can selectively temporarily store the right amount of surplus energy; and/or provide the right amount of energy to exactly satisfy the power demand in amounts either higher or lower than the instantaneous power capacity or even the generated power. This effectively eases the problems described above and also derives maximum energy benefit from any energy system.

### Section Three: Review on Conventional Energy Extractors

Conventional energy extraction devices include DC/AC inverters and the pulse width modulation (PWM) energy extraction device. This section investigates these two typical conventional energy extractors to reveal the root cause of their ineffectiveness and inefficiency.

Without losing generality, assumed that the primary energy source can hold at constant intensity (and having constant generator's power production) for a few seconds. As the first review case, the produced power is at a constant value, say at DC current I₁, DC voltage V₁, and thus a DC power P₁ = V₁ * I₁*pf, (where pf equals 1 in the case of DC); while energy extracted is represented by a conventional "pure sinusoidal DC/AC inverter of 50 - 60 Hz", as in the most of large PV solar power stations. This first review case will now be examined in detail as follows.

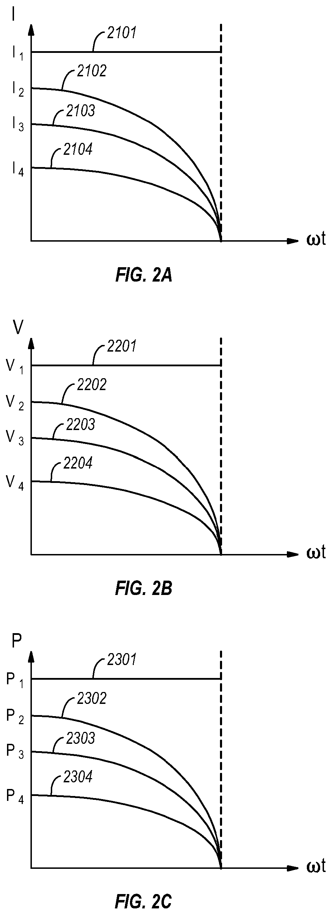

As shown in Figure 2A; the current of the generator output is depicted as the curve 2101; a constant DC current of I1, while the quarter cycle single phase cosine-wave AC inverter's 3 typical extracted currents (neglecting the loss; input = output) that characterizing three current extractions for three different load-demand cases are depicted by the curve 2102 of I₂*cos (ωt), the curve 2103 of I₃*cos (ωt), or the curve 2104 of I₄*cos (ωt). The charge conservation law only allows: I₁ > I₂, I₁ > I₃, and I₁ > I₄. The 4 averaged currents are I₁, (2/π)*I₂, (2/π)*I₃, and (2/π)*I₄ respectively, where π= 3.1416.

As shown in Figure 2B; the voltage of the generator output is depicted as the curve 2201; a constant DC voltage of V₁, while the quarter cycle single phase cosine-wave AC inverter's 3 typical extracted voltages (neglecting the loss; input = output) that representing 3 voltage extractions for three different load-demand cases are depicted as the curve 2202 of V₂*cos (ωt), the curve 2203 of V₃*cos (ωt), or the curve 2204 of V₄*cos (ωt). The energy and charge conservation laws only allow V₁ > V₂, V₁ > V₃, and V₁ > V₄. The 4 averages are V₁, (2/π)*V₂, (2/π)*V₃, and (2/π)*V₄ respectively.

As also shown in Figure 2C; the power of the generator output is depicted as the curve 2301; a constant DC power of P₁, while the quarter cycle single phase pure-cosine-wave AC inverter's 3 typical extracted powers (loss neglected, input = output) that representing 3 power extractions for three different load-demand cases are depicted as the curve 2302 of P₂*cos(ωt)* cos(ωt)*pf, the curve 2303 of P₃*cos (ωt)*cos (ωt)*pf, or the curve 2304 of P₄*cos(ωt)*cos (ωt)*pf. The pf is the power factor of the load. The energy conservation law only allows P₁ > P₂, P₁ > P₃, and P₁ > P₄. Taking pf =0.75 (above the regulation demanded pf >0.7), the 4 averaged-power are: P₁, 0.375*P₂, 0.375*P₃, and 0.375*P₄ respectively.

The fraction of energy extracted from the generator by this pure sinusoidal inverter is the averaged power output of the energy extractor divided by the averaged power generated. The energy fractions of these 3 represented typical extractions that characterizing different load-demand cases are: 0.375*P₂/P₁ for curve 2302, 0.375*P₃/P₁ for curve 2303 and 0.375*P₄/P₁ for curve 2304 respectively. Therefore, the energy extraction efficiency for this power extractor cannot be greater than 0.375, even taking extreme favorable case of P₁=P₂; otherwise, the energy extraction efficiency would be lower value.

To conclude from the above analyses: (1) for the conventional power extractor used in most of the "large PV solar power stations", the DC/AC inverter can only extract less than 37.5% (take it as < 40% hereinafter for convenience) of solar-electric power generated by the solar panels, the solar power generator(s); (2) with a properly designed surplus energy extraction device 1230 comprising of the device 1233 and energy reservoir 1235, the principles described herein can improve the energy extraction by well more than a factor of 2 over the conventional inverter.

The next subsection examines the other typical conventional energy extractor, the PWM energy extraction device: Without losing generality, again assumed that the primary energy source can hold at constant intensity (and having constant generator's power production) in a period of seconds. The produced power is at a constant value (say at DC current I₁, DC voltage V₁, and thus a DC power P₁ = V₁ * I₁) while the energy is extracted by a conventional PWM extractor. This case can be examined as follows.

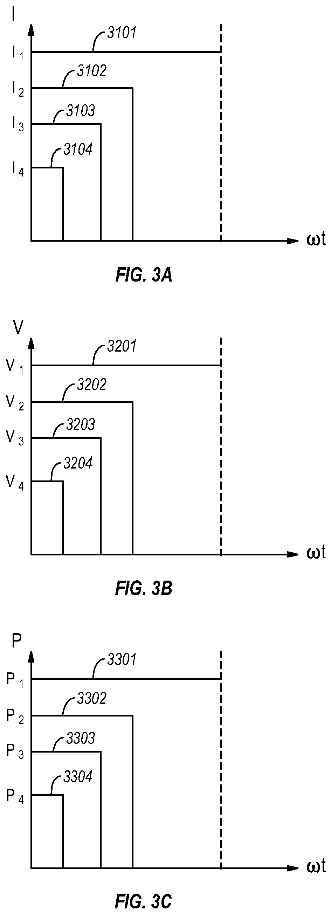

As shown in Figure 3A; the generated current is depicted as the curve 3101; a constant DC current of I₁, while neglecting the loss (input = output) the typical PWM energy extractor's three example currents representing three different load-demand cases are depicted as the curve 3102 with amplitude I₂ and duty factor of δ₂, the curve 3103 with amplitude I₃ and duty factor of δ₃, and the curve 3104 with amplitude I₄ and duty factor of δ₄. The charge conservation law only allows: I₁ > I₂, I₁ > I₃, and I₁ > I₄. The 4 averaged currents are: I₁, δ₂*I₂, δ₃*I₃, and δ₄*I₄ respectively.

As shown in Figure 3B; the generated voltage is depicted as the curve 3201; a constant DC voltage of V₁, while neglecting the loss (input = output) the PWM energy extractor's 3 example voltages representing three different load-demand cases are depicted as the curve 3202 with amplitude V₂ and duty factor of δ₂, the curve 3203 with amplitude V₃ and duty factor of δ₃, and the curve 3204 with amplitude V₄ and duty factor of δ₄. The energy and charge conservation laws only allow: V₁>V₂, V₁>V₃, and V₁>V₄. The 4 respective average-voltages are: V₁, δ₂*V₂, δ₃*V₃, and δ₄*V₄ respectively.

Also as shown in Figure 3C; the generated power is depicted as the curve 3301; a constant DC power of P₁ = V₁*I₁, while neglecting the loss (input = output) the typical PWM energy extractor's 3 example power representing three different load-demand cases are depicted as the curve 3302 with amplitude P₂ = V₂*I₂*pf and duty factor of δ₂, the pf is the power factor of the load the curve 3303 with amplitude P₃ = V₃*I₃*pf and duty factor of δ₃, and the curve 3304 with amplitude P₄ = V₄*I₄*pf and duty factor of δ₄. The energy conservation law only allows: P₁ > P₂, P₁ > P₃, and P₁ > P₄. The 4 power average-values are: P₁, δ₂*P₂*pf, δ₃*P₃*pf, and δ₄*P₄*pf respectively.

The fraction of energy extracted from the generator by the PWM energy extraction device is the averaged power output of the energy extractor divided by the averaged power generated. The energy fractions of these represented 3 typical extractions are: δ₂*pf*P₂/P₁ for the curve 3302, δ₃*pf *P₃/P₁ for the curve 3303 andδ₄*pf*P₄/P₁ for the curve 3304 respectively. Therefore the energy extraction efficiency for the PWM energy extractor cannot be greater than 0.6; that is taking extreme case of P₁=P₂ and δ₂ = 0.8 (which is the typical upper duty factor of 0.3 to 0.8) and also taking pf = 0.75. Otherwise, the P₁ > P₂ case would make the energy extraction efficiency even lower; and also the lower the duty factor (in the cases of low power production or low load-demand) the lesser the energy extraction efficiency.

As analyzed above: (1) the conventional power extractor used in most of "solar power street lamps", the PWM device can only extract less than 60% of solar-electric power generated by the solar panels; (2) with a properly designed surplus energy extraction device 1230 comprising of the extractor 1233 and the reservoir 1235, the principles described herein can improve the energy extraction at least by a factor of 1.5 over that of the conventional PWM extractor. This section clearly reveals the root-cause of the inefficiency and ineffectiveness in using the conventional extractors.

### Section Four: The Proposed Mechanisms for Perfect Energy Extraction

There are three ways to design the device 1233, to extract most amounts of surplus energy from the generator, which the surplus energy is the energy left-over from the conventional extraction device 1210. The three ways are referred to herein as the active way, the passive way, and a combination of the two. The device 1230 is named as the "surplus regulator" and the device 1233 is named as the "surplus core-regulator" herein. For instance, in the case that the device 1210 is a "pure sinusoidal DC/AC inverter", the principles described herein proposes to add another 90 degree out-of-phase inverter 1233A with its phase lucked onto the first inverter 1210. The 1233A module is named as the "active surplus extractor" herein.

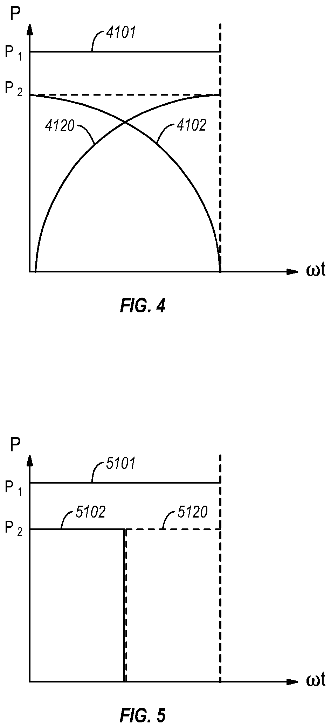

To elaborate, the Figure 4 depicts this concept schematically; the curve 4101 depicts the generated DC power P₁. The power extracted by the conventional energy extractor, the inverter 1210 is depicted as the curve 4102; representing the power extracted P₂*cos(ωt)*cos(ωt). The curve 4120 represents the power extracted by the other inverter 1233A that is locked 90 degrees out of phase, that is P₂*sin(ωt)*sin(ωt). Note that cos(ωt)*cos(ωt) + sin(ωt)*sin(ωt) is identically equal to unity. Thus, total power extracted by the two devices 1210 and 1233A is summed up to be exactly equal to P₂; as depicted in Figure 4.

When P₂ = P₁, the total energy extraction efficiency of these two combined devices is perfect at 100%. When P₂ < P₁, there is still some constant amount (P₁-P₂) of power left-over from the combined extraction. This constant left-over power can then be effectively and easily extracted by a matched capacitive/Faraday device 1233B to reach a perfect extraction theoretically. The 1233B is named as the "passive surplus extractor" herein. The capacitive/Faraday device 1233B can be a part of the energy reservoir 1235; but Figure 1B depicts it as a separate entity to emphasize its distinct function. With the combination of extraction in devices 1233 and 1210, one can theoretically extract all the generated energy.

In the case that the device 1210 is a PWM energy extractor, this invention proposes to add another out-of-phase PWM energy extractor 1233A with its phase lucked onto the first extractor 1210. Figure 5 depicts this concept schematically. The curve 5101 depicts the generated DC power, P1. The power extracted by the PWM 1210 is depicted as the curve 5102, representing the extracted power with amplitude P₂ and duty factor δ₂. The curve 5102 representing the power extracted by the other PWM 1233A phase lucked to be out-of-phase with the first extractor 1210, and with the extracted power is with amplitude P₂ duty factor (1-δ₂) and out of phase with respect to curve 5102. The total combined extracted power is then exact equal to P₂; as depicted in Figure 5.

When P₂ = P₁, the total energy extraction efficiency of these two combined devices is a perfect 100%. When P₂ < P₁, there is P₁-P₂ constant power left-over from the combined two power extraction devices 1210 and 1233A. This constant left-over power can be effectively and easily extracted by a matched capacitive/Faraday device 1233B to reach a perfect extraction. The capacitive/Faraday device can be a part of the energy reservoir 1235; but Figure 1B depicts it as a separate entity to emphasize this distinct function. With the combination of the extraction devices 1233 and 1210, one can theoretically extract all the generated energy again.

Notice that different power production and load demand would produce different left-over power (i.e., (P₁-P₂)) to be perfectly picked-up by the passive surplus extractor 1233B. Fortunately, in practice, the energy system does not require an exact matching Capacitive/Faraday device 1233B to passively extract most amounts of the left-over surplus power. By exercising fundamental electrical design skills, one can produce good designs for the needed Capacitive/Faraday device to passively extract the most amount of left-over surplus power. However, the generator operating voltage will then be passively shifted from the MPPP voltage to a new voltage that derives the maximum power extraction (summing all the power extracted by the extractors 1210, 1233A, and 1233B). In practice, this new voltage is typically at the vicinity of the MPPP voltage. In other words, the subsystem of the production/extraction of a system incorporating the principles described herein can still operate at a voltage near the MPPP to maximize the sum of power extracted; and produces near-maximum power at the same time.

### Section Five: Review on Conventional Energy Delivery managements

This section examines the conventional energy delivery (supply) managements. After the energy is extracted from the generator, the energy system needs to condition/prepare the energy; and then deliver the energy to the load 1300 for consumption. This process is named herein as "the energy supply"; or preferred to name as "the energy delivery".

The first important issue in energy delivery (supply) management is to protect the energy system from the overloading power demand. The second is to prevent the energy system from the damage due to the load disengagement. In other words, the instantaneous power demand should not exceed its designed maximum delivery power capacity (defined in the next paragraph); otherwise the load might be disengaged. Also, the energy delivery management should deal with any sudden load disengagement immediately to prevent damage to equipment, especially the damage to electronic gears.

The instantaneous maximum power supply capability of a conventional power station can be determined experimentally through the following measurements: (a) measure the instantaneous maximum power generation P₁*; (b) measure the instantaneous maximum power extraction P₂*; this power P₁* goes through the device 1210 to produce the measured P₂*<P₁*; and (c) measure the instantaneous maximum delivery power P₃*; this power P₂* goes through the device 1220 to produce the measured P₃*, P₃* <P₂* <P₁*. The P₃* is defined as the instantaneous power delivery capacity of this power station. It is the maximum available power to the load at that moment.

When the P₁* reaches its designed maximum value, the corresponding P₃* is named as the "designed maximum delivery power capacity" of the energy system. Notice that the values of P₁*, P₂*, and P₃* in a green energy system (such as solar power station) are varying in time; also that P₂* << P₁* when using the conventional energy extractor(s).

Knowing the measured 1220 output power P₃*, one can determine instantaneous power supply capacity of the power station. However, due to intimate coupling with load demand, the instantaneous efficiency of the energy delivery is still unknown. For example, when the load 1300 demands a power P₃ and the P₃ is less than the P₃*; the device 1220 can deliver the amount of power P₃ to the load. In this case, the instantaneous energy delivery efficiency is the load demand P₃ divided by P₂*. However when the load demand P₃ is larger than the instantaneous power delivery capacity P₃*, the device 1220 may refuse that power demand; and the load is disengaged to set the instantaneous energy delivery efficiency to zero.

Notice that the amount of mismatched power (P₃* - P₃) cannot be delivered to the load for consumption; and such mismatched amounts becomes heating power to the system, which can be troublesome. When the load disengaged, P₃ = 0. In this case, the large heating power, P₃* is dumped right into the circuitry of the system. This huge heating power can cook components of the system; generator, extractor, or management gears. Because the primary energy input can vary in time with large amplitude, say from zero to a certain large maximum value; the instantaneous power supply capacity, P₃* of a green energy system can also vary from zero to a certain large maximum value. Therefore, the constant large load demand, P₃ can often be larger than P₃*; the load disengaged from the energy supply to set the instantaneous energy delivery efficiency (so as the energy utilization efficiency) to zero. Any green energy system designed to drive a large constant load demand (such as solar water pump station) will definitely and commonly face this trouble.

For instance, the sunlight is the primary energy for solar powered water-pump stations; which are designed to drive a large load demand during pumping of water. During a sunny clear day, the amount of sunlight flux delivered onto the solar panels starts as zero at dawn. The flux is defined as the total amount of photons pass delivered to a defined area of the solar panels per unit time. Sunlight shines horizontally at dawn; and does not pass through horizontally mounted solar panels. Thus, the flux would zero at dawn. The sunlight flux increases monotonically until noon (when the flux is directed downwards onto the panels' surface) to reach its large maximum power production. Thereafter, the sunlight flux decreases monotonically in the afternoon to returns to zero in the evening at sunset which sunlight shines horizontally again. However, there might be thick clouds casting a dark shadow onto the solar panels for some period time in this example day. When the shadow is too dark for the system to provide adequate power to maintain the running pump, the pump disengages the load. This generated power may not be enough to drive the large pumping load, but may significantly damage the electronic gears inside. The principles described herein address this issue also.

On the other hand, the amount of power supply capacity, P₃* may be larger than the load demand P₃; and the amount (P₃* - P₃) power does not deliver to the load. This surplus energy is wasted without an energy reservoir. This portion of wasted energy shall be counted as another ineffectiveness of the device 1200. To reduce the station's capital cost, typically the large commercial solar power stations are not designed to include an energy reservoir. Thus, the above conclusions of the above analysis represent real and commonly true issues.

To evaluate the energy delivery efficiency of the device 1220; as example, let us study the following scenario representing the common, typical, and real situations. Suppose there is a solar water pump station that pumps water having a 120 meters water head, and that consists of four relaying staged pumping segments, each with 30 meters water head. The 4 pumps are with the same running power rating Pᵣ, and with the same required starting power Pₛ. Typically Pₛ> 3Pᵣ, some pumps even require Pₛ> 7Pᵣ.

First, let us examine the conventional solar water-pump station case. This solar water pump station encounters "12 time periods of one particular good sunny day". These 12 periods are described as following:
(1): the solar panels (referred as the solar station hereinafter) do not generate any electricity before dawn (say 6 AM) because there is no sunlight energy input; P(t₁)=0; no power generated, no power extracted, no power delivered, and no energy utilized. The energy utilization is 0.
(2): From dawn (6 AM) to 7 AM; the solar station generates solar power P₁*, extracted P₂* power, and has power supply capacity P(t₂) < Pᵣ, and thus the extracted power is not strong enough to even maintain the running pump Pᵣ; Pᵣ=Vᵣ*Iᵣ, where Vᵣ and Iᵣ are the voltage rating and current required to maintain the running pump. Since the DC/AC inverter is used to extract the generated power, P₂* < 0.4P₁*, the power supply capacity P(t₂) = P₂* (neglecting the power loss in 1220), and P₂* < Pᵣ. The station produced P₁*< 2.5Pᵣ power, extracted P₂*< Pᵣ power, and has a power capacity less than required pumping power. Accordingly, the extracted power does not engage the pump as load to consume the generated solar power; again zero energy utilization.
(3): From 7AM to 8AM, the solar station increases solar power generation; produced ~ 2.5*1.3Pᵣ power, extracted ~1.3Pᵣ power, and has a power supply capacity up to P(t₃) ~ 1.3 Pᵣ, enough to maintain one running pump; but not strong enough to start the pump (with Pₛ, Pₛ=Vᵣ*Iₛ). Notice that typically it takes > 3 times of Iᵣ (Iₛ > 3Iᵣ) to start a pump at its voltage rating. The energy utilization is again zero.
(4): From 8 AM to 10 AM, the solar station increases solar power generation; produced ~ 2.5*2.9Pᵣ power, extracted ~2.9Pᵣ power, and has a power supply capacity up to P(t₄) ~ 2.9 Pᵣ. This is strong enough to maintain one running pump; but still not strong enough to start the pump. The station cannot engage the pump as load to consume the generated solar power. Energy utilization is again zero.
(5): From 10 AM to 12 AM, the solar station increases solar power generation; the station produced ~ 2.5*3.7Pᵣ power, extracted ~3.7Pᵣ power, and has a power supply capacity up to P(t₅) ~ 3.7 Pᵣ. This is strong enough to start one pump. The station can start only one pump; and engage the pump load to consume the generated power. The energy utilization is only 2*Pᵣ in this time period.
(6): It happens that suddenly a heavy cloud covers part of the sky above, and casting a shadow onto the solar panels at noon for ~30 minutes; referred to as the "shadow casting". The power supply capacity P(t₆) plunges to below Pᵣ; the system disengages the load and no power consumption in this period. Energy utilization is again zero.
(7): From 12:30 PM to 2 PM, the shadow gradually reduces its darkness to generate solar power at 2.5*2.9Pᵣ; extracted 2.9Pᵣ, with power supply capacity up to P(t₇) ~ 2.9 Pᵣ; strong enough to maintain one running pump; but not strong enough to start the pump. The station still cannot engage the pump as load to consume the generated solar power. Energy utilization is again zero.
(8): From 2 PM to 4 PM, the sun-ray is good enough to generate solar power 2.5*3.3Pᵣ; extracted 3.3Pᵣ, power supply capacity up to P(t₈) ~ 3.3 Pᵣ; strong enough to start one pump (Pₛ>3Pᵣ). One pump is started; and engaged to consume the generated solar power. The energy utilization is only 2*Pᵣ.
(9): After 4 PM till 5 PM, the solar station decreases in solar power generation; extracted 2.3Pᵣ, with power supply capacity up to P(t₉) ~ 2.3 Pᵣ; still enough to maintain the running pump. The station still engages the pump load to consume the generated solar power. The energy utilization is only 1*Pᵣ.
(10): After 5 PM till 5:30 PM, the solar station decreases in power generation; extracted 1.1Pr, with power supply capacity up to P(t₁₀) ~ 1.1 Pᵣ; still enough to maintain the running pump. The station still engages the pump load to consume the generated solar power. The energy utilization is 0.5*Pᵣ.
(11): After 5:30 PM till 6 PM, the solar-ray is sluggish, the station's power generation fluctuating up and down, with power supply capacity P(t₁₁) also fluctuating at ~ 1.1 Pᵣ or below Pᵣ. Once it is below the Pᵣ, the station turns off the pump and do not have enough power to start the pump again during this time period. The station does not engage the pump to consume the generated solar power. Energy utilization is again zero.
(12): From 6PM to 7 PM (the sunset darkness); although the solar station still generate some power with power supply capacity P(t₁₂) < Pᵣ,; but it is not enough to maintain a running pump. The pump remains stopped; with no power consumption. After sunset, there will be no sunlight until next dawn; so the solar power generation stops and the pump also stops completely. Energy utilization is again zero.

The total energy utilization of this conventional solar water pump station is the sum of the energy utilization in the 12 periods; only 5.5*Pᵣ (Whr) for the whole day. The total available energy to deliver for consumption is the sum of the power supply capacity multiplied by the time period in the 12 periods; about 28.3*Pᵣ (Whr). Thus, the energy delivery efficiency of this conventional solar water pump station is 5.5 divided by 28.3, which is equal to 0.1943, which is about 19.4%. Because the energy extractor is a DC/AC inverter; the fraction of energy extraction is less than 0.4 (neglecting the energy consumed by the device 1210 and the device 1220), derived in Section Four. Therefore, the energy utilization efficiency and the controller efficiency is lower than 0.4*0.1943 = 0.0777, which is <10%.

### Section Six: The Energy Delivery Management

Before performing the evaluation of the energy delivery efficiency of the device 1220 in a solar water-pump station incorporating the principles described herein, let us further elaborate the management functions designed for the new modules 1233C and 1233D. To improve the energy delivery efficiency, the principles described herein proposes to incorporate modules 1233C and 1233D into the device 1230. The module 1233C is designed to selectively regulate the amount of power extracted by the device 1210; to adjust and produce an exact amount of energy P₂ as input to the device 1220; such that the device 1220 can deliver the right amount of power to exactly satisfy the load demand, when the demand is less than the supply capacity. When the load demand is larger than the supply capacity, the module 1233C is also designed to selectively regulate the device 1210 to extract the maximum amount of power P₂* from the generator's instantaneous maximum production power P₁*; and also regulate the module 1233D to prepare and supply the needed additional power P₂** from the reservoir 1235 and 1233B, such that when the combination power of P₂* + P₂** is supplied into the device 1220, the device 1220 can deliver the right amount of power to exactly satisfy the load demand. This effectuates the supply energy enhancement to help the device 1220 in order to handle bigger power demand than the system's instantaneous capacity provided by the instantaneous maximum power generated by generator 1100. Due to their functional characteristics, the device 1220 is named as the "supply power regulator"; module 1233C is named as the "supply regulator"; and module 1233D is named as the "energy adjust regulator" herein.

The next portion of this description evaluates the energy delivery (supply) efficiency of the device 1220 in a solar water-pump station incorporating this invention. As previously described, we shall again use an example in which there is a 120 meters water head solar water pump station that consist of four relaying staged pumping segments; each pumping segment with 30 meters water head. The 4 pumps are with the same running power Pᵣ, and with the same required starting power Pₛ. This solar water pump station encounters the same sunlight conditions as described above.

Without losing the generality but to keep the analysis simple; this analysis ignores all power consumptions in the devices 1210, 1230, and 1220; and taking the energy extraction efficiency to be 100% which makes the power supply capacity increased by a factor of 2.5 from the conventional inverter case. The 12 time period scenario is repeated and described as follows:
(1): the solar station do not generate any electricity before dawn (say 6 AM) because there is no sunlight; P(t₁)=0. The energy utilization is thus zero.
(2): From dawn (6 AM) to 7 AM; the solar station generates solar power with power supply capacity P(t₂) < 2.5*Pᵣ (W), which is strong enough to maintain a running pump but not strong enough to start the pump Pᵣ; Pᵣ=Vᵣ*Iᵣ, where Vᵣ and Iᵣ are the voltage rating and current required to maintain the running pump. Notice that it typically takes > 3 times of Iᵣ (Iₛ > 3Iᵣ) to start a pump at its voltage rating. Thus, the station does not engage the pump as its load to consume the generated solar power. However, the module 1233C regulates the devices 1210, 1233A, and 1233B to store and save the available energy ~ 2Pᵣ (Whr) into energy reservoir; the energy utilization is ~ 2Pᵣ (Whr).
(3): From 7AM to 8AM, the solar station increases power generation with power supply capacity up to P(t₃) ~ 2.5*1.3 Pᵣ = 3.25Pᵣ (W), enough to start one pump; and then uses the stored energy to start another 2 pumps to reach 3 pumps running together. Notice that although the starting power for the pump is large, it only takes a few second to start a pump and let it run in its normal power rating. The additional energy consumption for starting up a pump is thus small in comparison with the long time running energy. Therefore, there is not a big energy draining from the reservoir from the two pumps' start-up. The pump energy utilization is 3Pᵣ; while storage left-over energy is 0.25Pᵣ. The total energy utilization is 3.25Pᵣ; with accumulated energy storage is ~ 2.25Pᵣ.
(4): From 8 AM to 10 AM, the solar station increases solar power generation with power supply capacity up to P(t₄) ~ 2.5*2.9 Pᵣ = 7.25Pᵣ (W). This is strong enough to maintain the 3 running pumps and also to start up the last pump to reach 120 meters water head with four relaying staged pumping system all together. The station engaged 4 pumps as its loading to consume the generated solar 4Pᵣ power and store the available power 3.25Pᵣ in the period. The pump energy utilization is 2*4Pᵣ = 8Pᵣ (Whr) and the stored left-over energy is 2*3.25Pᵣ = 6.5Pᵣ (Whr). The total energy utilization is 14.5Pᵣ (Whr); with accumulated energy storage into the reservoir 1235 and 1233B is 8.75Pᵣ (Whr).
(5): From 10 AM to 12 AM, the solar station increases power generation with power supply capacity up to P(t₅) ~ 2.5*3.7 Pᵣ = 9.25Pᵣ (W), which is strong enough to maintain the 4 pumps running and to store the left-over 5.25Pᵣ of power into the energy reservoir over two hours. The pump energy utilization is 2*4Pᵣ = 8Pᵣ and energy storage utilization is 2*5.25Pᵣ = 10.5Pᵣ. The total energy utilization is 18.5Pᵣ; also with accumulated energy of 19.25Pᵣ inside the reservoirs 1235 and 1233B.
(6): It happens that suddenly a heavy cloud covers part of the sky above and casting a shadow onto the solar panels at noon for ~30 minutes; referred to as the "shadow casting". The power supply capacity P(t₆) plunges to below 2.5Pᵣ. This analysis ignores the generated solar power; demands the system to provide all the insufficient energy (0.5 hours with 4Pᵣ power) from the accumulated energy storage to sustain the pumps' loading; i.e., neglecting the solar power generated in these 30 minutes; and dictating the energy reservoir to provide the whole 4 pumps' power consumption in this period. The pump energy utilization is 0.5*4Pᵣ = 2Pᵣ and the energy drained from the energy storage is also 2Pᵣ to balance the energy. The total energy utilization is 2Pᵣ; the accumulated energy stored is also reduced by 2Pᵣ, to 17.25Pᵣ.
(7): From 12:30 PM to 2 PM, the shadow gradually reduces its darkness to generate solar power with power supply capacity up to P(t₇) ~ 2.5*2.9 Pᵣ = 7.25Pᵣ, strong enough to maintain the 4 running pumps; and store 3.25Pᵣ left-over power for 1.5 hours. The station engages the 4 pumps as its load to consume the generated solar power; the pumps' energy utilization is 1.5*4Pᵣ = 6Pᵣ. The storage energy utilization is 1.5*3.25Pᵣ = 4.875Pᵣ. The total energy utilization is 10.875Pᵣ; the cumulative stored energy is increased to 22.125Pᵣ.
(8): From 2 PM to 4 PM, the sunlight is good enough to generate solar power with power supply capacity up to P(t₈) ~ 2.5*3.3 Pᵣ = 8.25Pᵣ, which is strong enough to keep the 4 pumps running and store 4.25Pᵣ power into the reservoir for 2 hours. The pumps' energy utilization is 2*4*Pᵣ = 8Pᵣ; and the storage energy utilization is 8.5Pᵣ. The total energy utilization is 16.5Pᵣ and with accumulated storage energy reaches 30.6255Pᵣ.
(9): After 4 PM till 5 PM, the solar station decreases solar power generation with power supply capacity P(t₉) ~ 2.5*2.3 Pᵣ = 5.75Pᵣ; enough to maintain the 4 running pumps; The station still engages the pump load and reservoir to consume and to store the generated solar power. The pumps' energy utilization is only 4Pᵣ; the reservoir's energy utilization is 1.75Pᵣ. The total energy utilization is 5.75Pᵣ; accumulated energy storage reaches 32.375Pᵣ.
(10): After 5 PM till 5:30 PM, the solar station decreases solar power generation with power supply capacity to P(t₁₀) ~ 2.5*1.1Pᵣ = 2.75Pᵣ, not enough to maintain the 4 running pumps; but the 1233C and 1233D regulate the reservoir to provide the insufficient power of 1.25Pᵣ for 30 minutes to keep the 4 pumps running in the period. The pumps' energy utilization is 0.5*4Pᵣ = 2Pᵣ and the reservoir provides 0.5*1.25Pᵣ = 0.625Pᵣ energy-outlet to comply with the energy conservation law. The total pumps' energy utilization is 2.75Pᵣ; and the accumulated storage energy is decreased to 31.75Pᵣ.
(11): After 5:30 PM till 6 PM, the sunlight is dim, the station solar power generation fluctuated up and down, with power supply capacity P(t₁₁) also fluctuated at ~ 2.5*1.1 Pᵣ or below Pᵣ. This analysis ignores the solar energy production in this period, the reservoir provides all the needed energy to keep the 4 pumps running for the 30 minutes. The pumps' energy utilization is 0.5*4Pᵣ = 2Pᵣ. The total pumps' energy utilization is 2Pr; and the accumulated energy storage also reduced by 2Pᵣ; to 29.75Pᵣ.
(12): From 6PM to 7 PM (the sunset); although the solar station still generate some power with power supply capacity to P(t₁₂) < 2.5Pᵣ. This analysis ignores this power production. The 4 pumps are kept running with the energy from the reservoir for more than 7 hours; starting from 6 PM into the evening of no sunlight, then, the pumps stop and wait for the next sun rise to provide the primary energy to the station. The 4 pumps' energy utilization is 29.75Pᵣ which depleted today's energy storage inside the reservoir completely.

The total energy utilization of the solar water pump station incorporating the principles described herein is the sum of the energy utilization in the 12 time stages; about 72.75*Pᵣ for the whole day. The total available energy to be delivered is the sum of the power supply capacity in the 12 stages; about 75*Pᵣ. Thus, the energy delivery efficiency of this solar water pump station incorporating this invention is 72.75Pᵣ divided by 75Pᵣ which is equal to 0.97, which is about 97%. With almost perfect energy extraction, the energy utilization efficiency and also the controller efficiency is ~ 97%, which is much better than that of the solar water pump station without incorporating the principles described herein,, which is less than 10% evaluated previously. As the total amount of pumped water in the day, the pump incorporating the principles described herein is a factor of 72.75/5.5 > 13 of the conventional solar water pump station. What a difference!

### Section Seven: The Summary

In lieu of using conventional "blind MPPT conformation practice", the principles described herein can decouple the energy production and extraction from the energy deliver and demand. On the one hand, the energy production and extraction may be optimized by operating the generator and the incorporated active/passive extractors 1210, 1233A, 1233B, and reservoir 1235 at a new voltage of maximum power extraction. In practice, this new voltage is very close to the MPPP voltage. Also, these new devices can actively/passively extract the surplus energy that is not picked up by the conventional extractor 1210; so as to reach almost 100% energy extraction from the generator's near-maximum power production; as described in Section Four. On the other hand, the energy deliver to the demand is optimized by adding the new devices 1233C and 1233D to actively/passively combine the instantaneous energy extracted from the generator and the energy provided from the energy reservoir such that the energy preparation/delivery device can supply the right amount of energy in the correct specifications to exactly satisfy the demand power at the moment; as described in Section Six.

By doing so, the principles described herein can effectuate a practice that the energy systems can always operate at their maximum energy utilization point (MEUP) to exploit the most of energy benefit from energy systems; especially from the green energy systems. When the subsystems are properly matched to optimize the efficiency in each step, the systems' energy utilization efficiency is typically measured to be improved to above 95%.

In summary: Firstly, the energy system described herein incorporates a surplus regulator device 1230; specifically the modules 1233A and 1233B to work in conjunction with the energy reservoir 1235 to actively and passively pick up the surplus power generated that is not being extracted by the conventional power extractor 1210. By so doing, the fraction of energy extraction can be improved by more than a factor of 2; to almost perfectly extract all the produced power from the generator 1100.

Secondly, the principles described herein add energy adjustment regulator modules 1233C and 1233D to work with the energy reservoirs 1233B and 1235; such that the energy production/extraction process and the energy delivery/consumption process can be decoupled. Thus, the two processes can then be optimized separately.

Thirdly, the module 1233C is added to regulate the module 1233D to extract and to adjust the right amount of "needed" additional energy from the energy reservoir 1235 and 1233B actively and passively. This additional energy is combined with the instantaneous electricity extracted by the device 1210 directly from the 1100 to become a right amount of electric energy.

Fourthly, when this right amount of energy is delivered into the device 1220 (modules 1223 and 1225), the power is prepared and delivered to exactly satisfy the instantaneous load demand. The module 1223 is named as the "power preparation regulator"; and the module 1225 is named as the "power delivery regulator" herein.

The optimization procedure is: (A) to exercise fundamental electrical practice; one can to design a good for the active surplus extraction device 1233A and passive surplus extraction device 1233B, a Capacitive/Faraday device such that the generator 1100 can be operated in the vicinity of the MPPT voltage to produce near-maximum convert power and also to maximize the total power extraction as described in the Section Four. (B) The electric power produced is almost perfectly extracted by the conventional and the invented energy extractors 1210, 1233A, and 1233B actively and passively. (C) The invented device 1233C regulated the 1233D to extract and to adjust the right amount of "needed" additional energy from the energy reservoir 1235 and 1233B actively and passively. This additional energy is combined and prepared with the instantaneous electricity extracted by the 1210 directly from 1100 to become a right amount of electric energy. (D) The combined "right amount of electric energy" is sent into the device 1220 as input. This input energy went through modules of 1220, the module 1223 for preparation; such that when passed through the device 1225 to become the output from the 1220. (E) This output power is then delivered to near-exactly satisfy the instantaneous load demand of 1300.

Thus, the principles described herein can theoretically maximize the energy utilization to approximately 100%.

In other words, the principles described herein operates the generator at the vicinity of MPPP voltage to produce near-maximum power; to incorporate the invented energy extraction devices to maximize the sum of extract all the power generated; to temporarily store the surplus energy into designed energy reservoirs; to add the invented devices to regulate and combine the energy from the extractor and from the reservoir to become a right amount of power as input, to be prepared/delivered to near-exactly satisfy the instantaneous load demand.

Thus, this invention can maximize the energy benefit from energy systems; especially those energy system using primary energy resources associate with time varying intensity, such as sunlight, wind, tides, and wave motion.

## Claims

1. An energy system comprising:
a generator (1100) that converts a primary energy directly to DC electricity, the DC electricity being provided at an output of the generator;
an electrical energy reservoir (1235);
an inverter (1210) that operates at an electrical frequency to extract sinusoidal DC power from the generator (1100) and from the energy reservoir and to convert the extracted sinusoidal DC power into AC power; and
an out of phase inverter (1233a) that extracts surplus sinusoidal DC power of the same electrical frequency as the sinusoidal DC power extracted from the inverter but with approximately 90 degree phase difference relative to the sinusoidal DC power extracted by the inverter (1210), the out of phase inverter being configured to extract the surplus sinusiodal DC power produced by the generator but that was not extracted by the inverter, and to temporarily store at least some of the surplus DC power in the energy reservoir.

2. The energy system in accordance with Claim 1, the electrical frequency being variable in time or fixed in time.

3. The energy system in accordance with Claim 1, the inverter (1210) operating at an operating voltage that is variable in time or fixed in time.

4. The energy system in accordance with Claim 1, wherein when the out of phase inverter extracts at least some of the surplus sinusoidal DC power produced in the generator, the out of phase inverter draws the at least some of the extracted surplus sinusoidal DC power into the electrical energy reservoir at least when the sinusoidal DC power extracted by the inverter exceeds a load on the energy system.

5. The energy system in accordance with Claim 1, further comprising a power device that prepares and delivers power from the energy reservoir to satisfy a load demand of a load on the energy system when there is insufficient power extracted by the inverter to satisfy the load demand.

6. The energy system in accordance with Claim 5, the power device varying an amount of energy extracted from the energy reservoir so that the power device provides energy that at least approximately matches an instantaneously varying load demand of the load.

7. The energy system in accordance with Claim 1, a primary energy source of the primary energy being a variable energy source such that the generator generates a variable amount of electrical power.

8. The energy system in accordance with Claim 7, the inverter further comprising an extraction point tracker that tracks the time varying voltage of the maximum combined power extraction from the energy system by the inverter and by the out of phase inverter (1233a); and operates the system at this maximum power extraction point voltage.

9. The energy system in accordance with any of Claims 4 to 8, the load demand of the load being variable in time.

10. The energy system in accordance with Claim 9, the power device varying the amount of energy extracted from the energy reservoir so that the power device provides energy that at least approximately matches the instantaneously varying load demand of the load.

11. The energy system in accordance with Claim 1, the out of phase inverter (1233a) extracting some of the surplus sinusoidal DC power to increase energy provided to a power grid.

12. The energy system in accordance with Claim 1, the surplus sinusoidal DC power further comprising a surplus regulator that is coupled to an adjustable extraction device that operate at the same electrical frequency as the inverter to extract the surplus electric power either resulting from the primary source but not extracted by the inverter, and/or resulting from the power extraction exceeding the load demand.

13. The energy system in accordance with Claim 12, the adjustable extraction device being at least one of the following:
- an active device; that operates at the same electrical frequency as the inverter; and locks-onto the power extractor with an approximate ninety degree phase shift such that the adjustable extractor extracts up to a complementary amount of power as the out of phase inverter,
- a combined active device that consists of plurality active devices; operating at same electric frequency as the inverter but the plurality active devices collectively extracting up to a complementary amount of power as the out of phase inverter,
- a passive device that has an approximately ninety degree phase shift from the inverter to extract up to a complementary amount of power as the out of phase inverter.

14. The energy system in accordance with Claim 13, the passive adjustable extractor being a capacitive/faraday device that has a large enough capacitance to make the passive adjustable extractor have an approximately ninety degree phase shift from the inverter to extract up to a complementary amount of power as the surplus power.

## Patentansprüche

1. Ein Energiesystem, aufweisend:
einen Generator (1100), der eine Primärenergie direkt in Gleichstromelektrizität umwandelt, wobei die Gleichstromelektrizität an einem Ausgang des Generators bereitgestellt wird;
einen elektrischen Energiespeicher (1235);
einen Wechselrichter (1210), der mit einer elektrischen Frequenz betrieben wird, um sinusförmige Gleichstromleistung aus dem Generator (1100) und dem Energiespeicher zu entnehmen und die entnommene sinusförmige Gleichstromleistung in Wechselstromleistung umzuwandeln; und
einen phasenverschobenen Wechselrichter (1233a), der überschüssige sinusförmige Gleichstromleistung mit derselben elektrischen Frequenz wie die vom Wechselrichter entnommene sinusförmige Gleichstromleistung, jedoch mit einer Phasendifferenz von ungefähr 90 Grad relativ zu der vom Wechselrichter (1210) entnommenen sinusförmigen Gleichstromleistung entnimmt, wobei der phasenverschobene Wechselrichter dazu eingerichtet ist, die vom Generator erzeugte überschüssige sinusförmige Gleichstromleistung zu entnehmen, die vom Wechselrichter nicht entnommen wurde, und wenigstens einen Teil der überschüssigen Gleichstromleistung vorübergehend im Energiespeicher zu speichern.

2. Das Energiesystem nach Anspruch 1, wobei die elektrische Frequenz zeitlich variabel oder zeitlich konstant ist.

3. Das Energiesystem nach Anspruch 1, wobei der Wechselrichter (1210) mit einer Betriebsspannung betrieben wird, die zeitlich variabel oder zeitlich konstant ist.

4. Das Energiesystem nach Anspruch 1, wobei der phasenverschobene Wechselrichter, wenn er wenigstens einen Teil der im Generator erzeugten überschüssigen sinusförmigen Gleichstromleistung entnimmt, wenigstens einen Teil der entnommenen überschüssigen sinusförmigen Gleichstromleistung in den elektrischen Energiespeicher einspeist, zumindest dann, wenn die vom Wechselrichter entnommene sinusförmige Gleichstromleistung eine Last des Energiesystems übersteigt.

5. Das Energiesystem nach Anspruch 1, ferner aufweisend eine Leistungsvorrichtung, die Leistung aus dem Energiespeicher aufbereitet und bereitstellt, um eine Lastanforderung einer Last des Energiesystems zu erfüllen, wenn die vom Wechselrichter entnommene Leistung nicht ausreicht, um die Lastanforderung zu erfüllen.

6. Das Energiesystem nach Anspruch 5, wobei die Leistungsvorrichtung eine aus dem Energiespeicher entnommene Energiemenge variiert, so dass die Leistungsvorrichtung Energie bereitstellt, die wenigstens näherungsweise einer momentan variierenden Lastanforderung der Last entspricht.

7. Das Energiesystem nach Anspruch 1, wobei eine Primärenergiequelle der Primärenergie eine variable Energiequelle ist, so dass der Generator eine variable Menge elektrischer Leistung erzeugt.

8. Das Energiesystem nach Anspruch 7, wobei der Wechselrichter ferner einen Entnahmepunkt-Tracker aufweist, der eine zeitlich variierende Spannung einer maximalen kombinierten Leistungsentnahme aus dem Energiesystem durch den Wechselrichter und den phasenverschobenen Wechselrichter (1233a) verfolgt und das System bei dieser Spannung des maximalen Leistungsentnahmepunktes betreibt.

9. Das Energiesystem nach einem der Ansprüche 4 bis 8, wobei die Lastanforderung der Last zeitlich variabel ist.

10. Das Energiesystem nach Anspruch 9, wobei die Leistungsvorrichtung die aus dem Energiespeicher entnommene Energiemenge variiert, so dass die Leistungsvorrichtung Energie bereitstellt, die wenigstens näherungsweise der momentan variierenden Lastanforderung der Last entspricht.

11. Das Energiesystem nach Anspruch 1, wobei der phasenverschobene Wechselrichter (1233a) einen Teil der überschüssigen sinusförmigen Gleichstromleistung entnimmt, um die in ein Stromnetz eingespeiste Energie zu erhöhen.

12. Das Energiesystem nach Anspruch 1, wobei die überschüssige sinusförmige Gleichstromleistung ferner einen Überschussregler aufweist, der mit einer einstellbaren Entnahmevorrichtung gekoppelt ist, die mit derselben elektrischen Frequenz wie der Wechselrichter betrieben wird, um überschüssige elektrische Leistung zu entnehmen, die entweder von der Primärquelle stammt, jedoch vom Wechselrichter nicht entnommen wurde, und/oder daraus resultiert, dass die Leistungsentnahme die Lastanforderung übersteigt.

13. Das Energiesystem nach Anspruch 12, wobei die einstellbare Entnahmevorrichtung wenigstens eine der folgenden Vorrichtungen ist:
- eine aktive Vorrichtung, die mit derselben elektrischen Frequenz wie der Wechselrichter betrieben wird und sich mit einer Phasenverschiebung von ungefähr neunzig Grad an den Leistungsentnehmer ankoppelt, so dass die einstellbare Entnahmevorrichtung eine zur Leistung des phasenverschobenen Wechselrichters komplementäre Leistungsmenge entnimmt;
- eine kombinierte aktive Vorrichtung, die aus einer Mehrzahl aktiver Vorrichtungen besteht, die mit derselben elektrischen Frequenz wie der Wechselrichter betrieben werden, wobei die Mehrzahl aktiver Vorrichtungen gemeinsam eine zur Leistung des phasenverschobenen Wechselrichters komplementäre Leistungsmenge entnimmt; oder
- eine passive Vorrichtung, die eine Phasenverschiebung von ungefähr neunzig Grad relativ zum Wechselrichter aufweist, um eine zur Leistung des phasenverschobenen Wechselrichters komplementäre Leistungsmenge zu entnehmen.

14. Das Energiesystem nach Anspruch 13, wobei die passive einstellbare Entnahmevorrichtung eine kapazitive/Faraday-Vorrichtung ist, die eine ausreichend große Kapazität aufweist, so dass die passive einstellbare Entnahmevorrichtung eine Phasenverschiebung von ungefähr neunzig Grad relativ zum Wechselrichter aufweist, um eine zur überschüssigen Leistung komplementäre Leistungsmenge zu entnehmen.

## Revendications

1. Système d'énergie comprenant :
un générateur (1100) qui convertit une énergie primaire directement en électricité à courant continu, l'électricité à courant continu étant fournie à une sortie du générateur ;
un réservoir d'énergie électrique (1235) ;
un onduleur (1210) qui fonctionne à une fréquence électrique pour extraire une puissance à courant continu sinusoïdale du générateur (1100) et du réservoir d'énergie et pour convertir la puissance à courant continu sinusoïdale extraite en puissance à courant alternatif ; et
un onduleur déphasé (1233a) qui extrait une puissance à courant continu sinusoïdale excédentaire de la même fréquence électrique que la puissance à courant continu sinusoïdale extraite de l'onduleur mais avec une différence de phase d'approximativement 90 degrés par rapport à la puissance à courant continu sinusoïdale extraite par l'onduleur (1210), l'onduleur déphasé étant configuré pour extraire la puissance à courant continu sinusoïdale excédentaire produite par le générateur mais qui n'a pas été extraite par l'onduleur, et pour stocker temporairement au moins une partie de la puissance à courant continu excédentaire dans le réservoir d'énergie.

2. Système d'énergie selon la revendication 1, la fréquence électrique étant variable dans le temps ou fixe dans le temps.

3. Système d'énergie selon la revendication 1, l'onduleur (1210) fonctionnant à une tension de fonctionnement qui est variable dans le temps ou fixe dans le temps.

4. Système d'énergie selon la revendication 1, dans lequel, lorsque l'onduleur déphasé extrait au moins une partie de la puissance à courant continu sinusoïdale excédentaire produite dans le générateur, l'onduleur déphasé attire l'au moins une partie de la puissance à courant continu sinusoïdale excédentaire extraite dans le réservoir d'énergie électrique au moins lorsque la puissance à courant continu sinusoïdale extraite par l'onduleur dépasse une charge sur le système d'énergie.

5. Système d'énergie selon la revendication 1, comprenant en outre un dispositif de puissance qui prépare et délivre une puissance à partir du réservoir d'énergie pour satisfaire une demande de charge d'une charge sur le système d'énergie lorsqu'il y a une puissance insuffisante extraite par l'onduleur pour satisfaire la demande de charge.

6. Système d'énergie selon la revendication 5, le dispositif de puissance faisant varier une quantité d'énergie extraite du réservoir d'énergie de sorte que le dispositif de puissance fournisse une énergie qui correspond au moins approximativement à une demande de charge variant instantanément de la charge.

7. Système d'énergie selon la revendication 1, une source d'énergie primaire de l'énergie primaire étant une source d'énergie variable de sorte que le générateur génère une quantité variable de puissance électrique.

8. Système d'énergie selon la revendication 7, l'onduleur comprenant en outre un suiveur de point d'extraction qui suit la tension variant dans le temps de l'extraction de puissance combinée maximale du système d'énergie par l'onduleur et par l'onduleur hors phase (1233a) ; et fait fonctionner le système à cette tension de point d'extraction de puissance maximale.

9. Système d'énergie selon l'une quelconque des revendications 4 à 8, la demande de charge de la charge étant variable dans le temps.

10. Système d'énergie selon la revendication 9, le dispositif de puissance faisant varier la quantité d'énergie extraite du réservoir d'énergie de sorte que le dispositif de puissance fournisse une énergie qui correspond au moins approximativement à la demande de charge variant instantanément de la charge.

11. Système d'énergie selon la revendication 1, l'onduleur déphasé (1233a) extrayant une partie de la puissance à courant continu sinusoïdale excédentaire pour augmenter l'énergie fournie à un réseau électrique.

12. Système d'énergie selon la revendication 1, la puissance à courant continu sinusoïdale excédentaire comprenant en outre un régulateur excédentaire qui est couplé à un dispositif d'extraction réglable qui fonctionne à la même fréquence électrique que l'onduleur pour extraire la puissance électrique excédentaire soit résultant de la source primaire mais non extraite par l'onduleur, et/ou résultant de l'extraction de puissance dépassant la demande de charge.

13. Système d'énergie selon la revendication 12, le dispositif d'extraction réglable étant au moins l'un des suivants :
- un dispositif actif ; qui fonctionne à la même fréquence électrique que l'onduleur ; et se verrouille sur l'extracteur de puissance avec un déphasage d'approximativement quatre-vingt-dix degrés de sorte que l'extracteur réglable extraie jusqu'à une quantité complémentaire de puissance en tant qu'onduleur déphasé,
- un dispositif actif combiné qui consiste en une pluralité de dispositifs actifs ; fonctionnant à la même fréquence électrique que l'onduleur mais la pluralité de dispositifs actifs extrayant collectivement jusqu'à une quantité complémentaire de puissance en tant qu'onduleur déphasé,
- un dispositif passif qui a un déphasage d'approximativement quatre-vingt-dix degrés de l'onduleur pour extraire jusqu'à une quantité complémentaire de puissance en tant qu'onduleur déphasé.

14. Système d'énergie selon la revendication 13, l'extracteur réglable passif étant un dispositif capacitif/faraday qui a une capacité suffisamment grande pour amener l'extracteur réglable passif à avoir un déphasage d'approximativement quatre-vingt-dix degrés de l'onduleur pour extraire jusqu'à une quantité complémentaire de puissance en tant que puissance excédentaire.
